# FASCICULE DE BREVET EUROPEEN

(11) **EP 3 939 891 B1**
(45) Date de publication et mention de la délivrance du brevet: **26.04.2023**
(21) Numéro de dépôt: 21179197.5
(22) Date de dépôt: 14.06.2021
(51) Int. Cl.: B64D 27/26

(54) **ENSEMBLE POUR UN AÉRONEF COMPORTANT UNE AILE ET UN MÂT RÉACTEUR POUR COUPLER UN TURBORÉACTEUR À LADITE AILE**
ANORDNUNG FÜR EIN LUFTFAHRZEUG AUS EINEM FLÜGEL UND EINEM TRIEBWERKSTRÄGER ZUR ANKOPPLUNG EINES TURBOTRIEBWERKS AN DIESEN FLÜGEL
ASSEMBLY FOR AN AIRCRAFT COMPRISING A WING AND A REACTOR MAST FOR COUPLING A JET ENGINE WITH SAID WING

(30) Priorité: 17.07.2020 FR 2007496
(43) Date de publication de la demande: 19.01.2022
(73) Titulaire: AIRBUS OPERATIONS (S.A.S.), 31060 Toulouse (FR)
(72) Inventeur: PAUTIS, Olivier, 31060 TOULOUSE (FR); BERJOT, Michael, 31060 TOULOUSE (FR); GUENEAU, Germain, 31060 TOULOUSE (FR)
(74) Mandataire: Sarraméa, Claude

(56) Documents cités:
- EP-A1- 0 115 914
- FR-A1- 2 915 178
- FR-A1- 3 012 793
- US-A1- 2016 290 391
- US-B2- 8 205 825

## Description

### DOMAINE TECHNIQUE

La présente invention concerne un ensemble pour un aéronef qui comporte une aile et un mât réacteur pour monter un turboréacteur sous l'aile, ainsi qu'un aéronef comportant un turboréacteur et un tel ensemble pour monter le turboréacteur sous l'aile.

### ÉTAT DE LA TECHNIQUE ANTÉRIEURE

Habituellement, pour un aéronef, un ensemble de propulsion comporte un turboréacteur qui est fixé sous une aile de l' aéronef à l'aide d'un mât réacteur. Le mât réacteur est généralement constitué d'une structure primaire formée d'un caisson constitué d'un longeron supérieur, d'un longeron inférieur et de deux panneaux latéraux reliant les deux longerons et de nervures internes réparties le long du caisson.

Le turboréacteur est fixé sous le mât réacteur aux moyens d'attaches moteur qui comprennent classiquement, à l'avant, une attache moteur avant, à l'arrière, une attache moteur arrière, et entre les attaches moteur avant et arrière, un assemblage de reprise d'effort de poussée comprenant des bielles de reprise, fixées d'une part au turboréacteur, et d'autre part à un sabot solidaire de la structure primaire du mât, pour absorber les forces de poussée générées par le turboréacteur.

Un système de fixation fixe le mât réacteur à l'aile. Ce système de fixation réagit et absorbe les moments de flexion et les efforts tranchants à l'interface du mât réacteur avec l'aile. Un exemple d'un tel arrangement est décrit dans le document US-A-2016/0221682.

Les documents US-A1-2016/0290391 et EP-A1-0115914 décrivent des systèmes de fixation d'un mât réacteur à une aile d'aéronef selon l'art antérieur.

Dans les conceptions conventionnelles, le caisson primaire et la structure primaire ont des formes complexes et le système de fixation est relativement encombrant et il est donc souhaitable de trouver une installation qui permet une réduction des dimensions des différents composants.

### EXPOSÉ DE L'INVENTION

Un objet de la présente invention est de proposer un ensemble pour un aéronef comportant une aile et un mât réacteur pour monter un turboréacteur sous l'aile et qui comporte des moyens de fixation à l'aile présentant des encombrements réduits.

A cet effet, est proposé un mât réacteur pour le montage d'un turboréacteur sous une aile d'un aéronef, le mât réacteur comportant :
- une structure primaire formant un caisson et comportant un panneau latéral tribord, un panneau latéral bâbord, un longeron supérieur, un longeron inférieur et une nervure arrière qui ferme le caisson à l'arrière,
- un premier et un deuxième jeux de manilles supérieures, où le premier jeu de manilles supérieures fixe, en utilisation, le panneau latéral tribord à un élément structurel de l'aile, et où le deuxième jeu de manilles supérieures fixe, en utilisation, le panneau latéral bâbord à un élément structurel de l'aile,
- un premier et un deuxième jeux de manilles inférieures, où le premier jeu de manilles inférieures fixe, en utilisation, le panneau latéral tribord à un élément structurel de l'aile, et où le deuxième jeu de manilles inférieures fixe, en utilisation, le panneau latéral bâbord à un élément structurel de l'aile,
- un élément de fixation solidaire de l'un parmi la nervure arrière ou le longeron inférieur,
- une bielle arrière qui relie l'élément de fixation à un élément structurel de l'aile, et
- une manille transversale qui relie le longeron supérieur à un élément structurel de l'aile et où la ligne reliant les deux centres de la manille transversale est orientée transversalement par rapport à un axe longitudinal du mât réacteur,
- un panneau de renfort, au niveau de chaque jonction entre un panneau latéral tribord ou bâbord avec une manille du premier ou deuxième jeux de manilles supérieures ou inférieures, qui est fixé sur la hauteur contre le panneau latéral tribord ou bâbord et auquel ladite manille du premier ou deuxième jeux de manilles supérieures ou inférieures est également fixée.

Avec un tel mât réacteur, il est alors possible d'obtenir un assemblage isostatique et un système de fixation présentant un encombrement réduit.

Avantageusement, les manilles supérieures du premier et du deuxième jeux de manilles supérieures sont orientées avec une inclinaison comprise entre 0° et 45° par rapport à un axe purement horizontal, et de préférence, elles sont orientées quasi horizontalement.

Avantageusement, les manilles du premier et du deuxième jeux de manilles supérieures sont chacune alignées dans la continuité avec le panneau latéral auquel elles sont fixées.

Avantageusement, les manilles inférieures du premier et du deuxième jeux de manilles inférieures sont orientées selon une inclinaison comprise entre 0° et 30° par rapport à un axe purement vertical, et de préférence, elles sont orientées quasi verticalement.

Avantageusement, les manilles du premier et du deuxième jeux de manilles inférieures sont chacune alignées dans la continuité avec le panneau latéral auquel elles sont fixées.

L'invention propose également un aéronef comportant un turboréacteur, un ensemble selon l'une des variantes précédentes, où le turboréacteur est fixé sous le mât réacteur.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La figure 1 est une vue de côté d'un aéronef selon l'invention,
La figure 2 est une vue en perspective de côté d'un mât réacteur selon un premier mode de réalisation de l'invention fixé à une aile d'un aéronef,
La figure 3 montre une vue en perspective et de l'autre côté du mât réacteur selon le premier mode de réalisation de l'invention,
La figure 4 montre une vue en perspective de devant et en coupe du mât réacteur selon le premier mode de réalisation de l'invention, où la coupe correspond au plan IV de la Figure 2, et
La figure 5 montre une vue en perspective de côté d'un mât réacteur selon un deuxième mode de réalisation de l'invention.

### EXPOSÉ DÉTAILLÉ DE MODES DE RÉALISATION

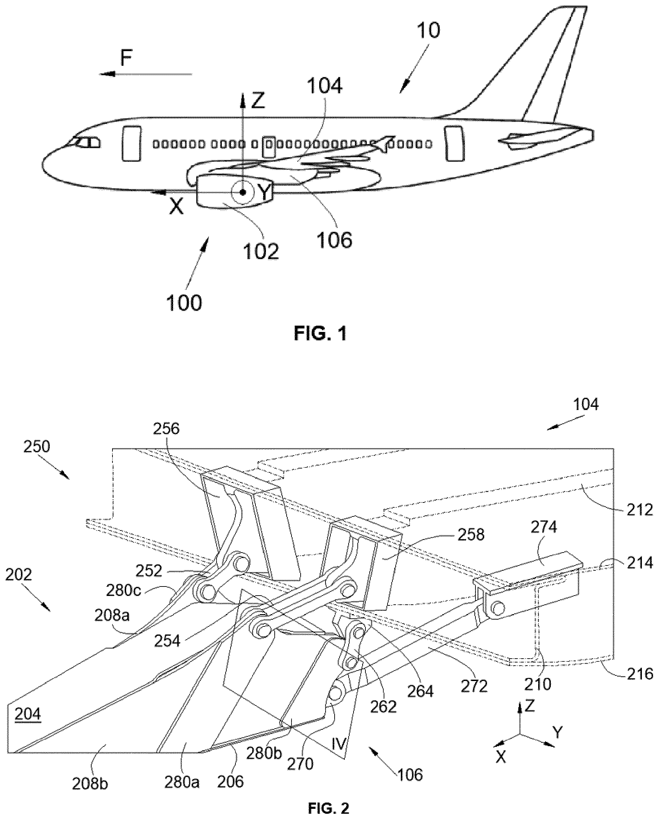

La Figure 1 montre un aéronef 10 qui comporte un système de propulsion 100 avec un turboréacteur 102 fixé à une aile 104 de l'aéronef 10 par l'intermédiaire d'un mât réacteur 106. L'aile 104 et le mât réacteur 106 forment un ensemble selon l'invention et le turboréacteur 102 est fixé sous le mât réacteur 106.

Dans la description qui suit, les termes relatifs à une position sont pris en référence à un aéronef en position normale de vol, c'est-à-dire comme il est représenté sur la Figure 1 et les positions « avant » et « arrière » sont prises par rapport à l'avant et l'arrière du turboréacteur et par rapport à la direction d'avancement F de l'aéronef 10 lorsque le turboréacteur 102 fonctionne.

Dans la description qui suit, et par convention, on appelle X la direction longitudinale du turboréacteur qui est parallèle à l'axe longitudinal dudit turboréacteur, on appelle Y la direction transversale qui est horizontale lorsque l'aéronef est au sol, et Z la direction verticale qui est verticale lorsque l'aéronef est au sol, ces trois directions X, Y et Z étant orthogonales entre elles.

Le turboréacteur 102 présente une forme de révolution autour de son axe longitudinal.

Comme le montre la Figure 2, le mât réacteur 106 comprend une structure rigide 202 formant un caisson et également appelée structure primaire. La structure primaire 202 est formée d'un longeron supérieur 204, d'un longeron inférieur 206 et de deux panneaux latéraux 208a-b reliant les deux longerons 204 et 206. La structure primaire 202 peut également comporter des nervures internes réparties à l'intérieur de la structure primaire 202 et fixées aux longerons 204 et 206 et aux panneaux latéraux 208a-b. Il y a ainsi un panneau latéral tribord 208a et un panneau latéral bâbord 208b. Selon une configuration non représentée sur les figures, le longeron supérieur 204 est sensiblement plat, c'est-à-dire que le longeron supérieur 204 n'est pas plié.

La Figure 2 montre également la structure de l'aile 104 qui est vue en traits mixtes. La structure de l'aile 104 comporte un longeron avant 210 et des nervures 212. Le longeron avant 210 est globalement dans un plan parallèle au plan YZ et les nervures 212 sont globalement dans des plans parallèles au plan XZ. La structure de l'aile 104 est recouverte d'un panneau d'extrados 214 et d'un panneau d'intrados 216 qui sont fixés à ladite structure.

Dans le mode de réalisation de l'invention présenté ici, la structure primaire 202 est réalisée en métal mais elle peut également être réalisée en matériaux composites.

La structure primaire 202 soutient le turboréacteur 102 par l'intermédiaire d'attaches moteur qui peuvent être de conception conventionnelle telles que celles divulguées dans le document US-A-2016/0221682.

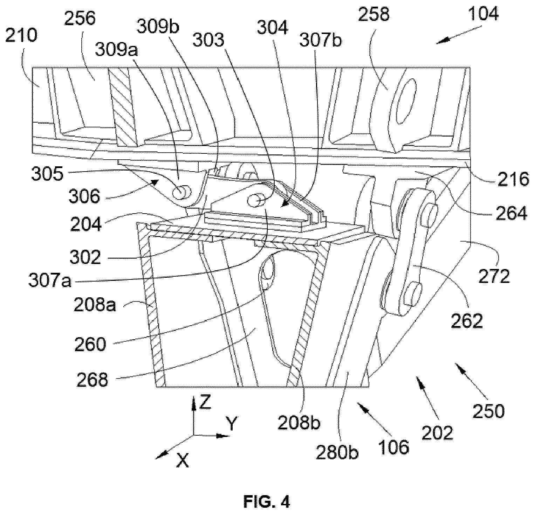

Les Figures 2, 3 et 4 montrent un système de fixation 250 du mât réacteur 106 qui relie le mât réacteur 106 à l'aile 104.

Le système de fixation 250 comporte un premier et un deuxième jeux de manilles supérieures ou liens 252 et 254 qui fournissent une double jonction/connexion de cisaillement.

En utilisation, le premier jeu de manilles supérieures 252 lie, c'est-à-dire fixe, en utilisation, le panneau latéral tribord 208a à un élément structurel 210 de l'aile 104. Ici l'élément structurel de l'aile 104 est le longeron avant 210 et la liaison/jonction s'effectue par l'intermédiaire d'un premier support 256 fixé audit élément structurel 210 de l'aile 104.

En utilisation, le deuxième jeu de manilles supérieures 254 lie, c'est-à-dire fixe, en utilisation, le panneau latéral bâbord 208b à un élément structurel 210 de l'aile 104. Ici l'élément structurel de l'aile 104 est le longeron avant 210 et la liaison s'effectue par l'intermédiaire d'un deuxième support 258 qui est également fixé audit élément structurel 210 de l'aile 104.

Le premier support 256 et le deuxième support 258 prennent ici la forme de ferrures fixées à l'avant au longeron avant 210.

Les jonctions des manilles supérieures 252 et 254 avec les panneaux latéraux 208a-b et les supports 256, 258 sont assurées par des goupilles ou d'autres structures qui s'étendent à travers des orifices des divers éléments.

Les manilles supérieures 252 et 254 sont orientées en X/Z et chacune est alignée avec une âme d'une nervure 212 de l'aile 104 et avec le panneau latéral 208a-b auquel elle est fixée. Plus précisément, chaque manille supérieure 252, 254 s'étend parallèlement à l'un des panneaux latéraux 208a-b, et est alignée en continuité avec ledit panneau latéral 208a-b.

Ainsi, les manilles supérieures 252 et 254 sont, du côté du mât, chacune alignée dans la continuité avec le panneau latéral 208a-b auquel elles sont fixées, et du coté de l'aile 104, positionnées en face d'au moins un élément structurel 210 de l'aile 104 selon un axe longitudinal horizontal.

Les manilles supérieures 252 et 254 sont orientées quasi horizontalement, c'est-à-dire que la ligne reliant les deux centres d'une même manille supérieure 252, 254 est quasiment horizontale. Néanmoins, ces manilles supérieures 252 et 254 pourraient être orientées avec une inclinaison comprise entre 0° et 45° par rapport à un axe purement horizontal.

Le système de fixation 250 comprend un premier et un deuxième jeux de manilles inférieures ou liens 260 et 262.

En utilisation, le premier jeu de manilles inférieures 260 fixe le panneau latéral tribord 208a à un élément structurel 210, 216 de l'aile 104. Ici, l'élément structurel 210, 216 de l'aile 104 est le longeron avant 210 à travers le panneau d'intrados 216 et la liaison s'effectue par l'intermédiaire d'un premier support additionnel fixé audit élément structurel 210, 216.

En utilisation, le deuxième jeu de manilles inférieures 262 fixe le panneau latéral bâbord 208b à un élément structurel 210, 216 de l'aile 104. Ici, l'élément structurel 210, 216 de l'aile 104 est le longeron avant 210 à travers le panneau d'intrados 216 et la liaison s'effectue par l'intermédiaire d'un deuxième support additionnel 264 qui est également fixé audit élément structurel 210, 216 de l'aile 104. Sur les Figures 2 à 4, seul le support additionnel 264 correspondant au deuxième jeu de manilles inférieures 262 est visible.

Le premier support additionnel et le deuxième support additionnel 264 prennent ici la forme de ferrures fixées sous le longeron avant 210 à travers le panneau d'intrados 216.

Les jonctions des manilles inférieures 260, 262 avec les panneaux latéraux 208a-b et les supports additionnels 264 sont assurées par des goupilles ou d'autres structures qui s'étendent à travers des orifices des divers éléments.

Chaque manille inférieure 260, 262 est orientée en Z et alignée avec l'âme du longeron avant 210 de l'aile 104 et le panneau latéral 208a-b auquel elle est fixée. Plus précisément, chaque manille inférieure 260, 262 s'étend parallèlement à l'un des panneaux latéraux 208a-b, et est alignée en continuité avec ledit panneau latéral 208a-b.

Ainsi, les manilles inférieures 260, 262 sont, du côté du mât, chacune alignée dans la continuité avec le panneau latéral 208a-b auquel elles sont fixées, et du coté de l'aile 104, positionnées en face d'au moins un élément structurel 210, 216 de l'aile 104 selon un axe vertical.

Les manilles inférieures 260 et 262 sont orientées quasi verticalement, c'est-à-dire que la ligne reliant les deux centres d'une même manille inférieure 260, 262 est quasiment verticale. Néanmoins, ces manilles inférieures 260 et 262 pourraient être orientées avec une inclinaison comprise entre 0° et 30° par rapport à un axe purement vertical.

La structure primaire 202 comporte une nervure arrière 268 qui ferme le caisson à l'arrière entre les panneaux latéraux 208a-b.

Le système de fixation 250 comporte également un élément de fixation 270 qui selon un premier mode de réalisation représenté sur les Figures 2 à 4 est solidaire de la nervure arrière 268 et orienté à l'extérieur du caisson et vers l'arrière. Dans ce premier mode de réalisation, l'élément de fixation 270 prend la forme d'une chape arrière.

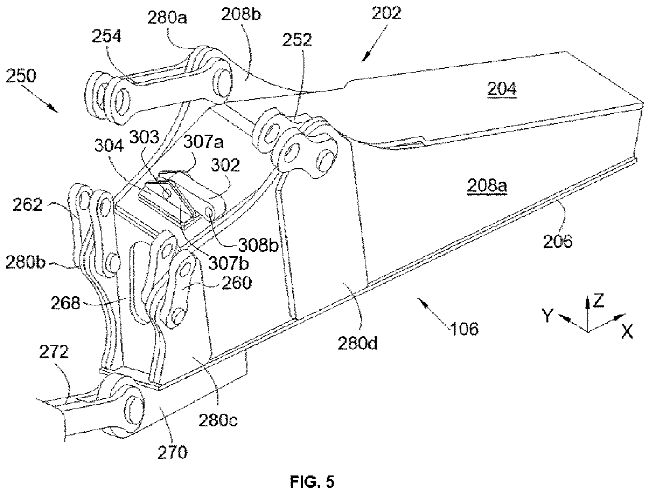

Dans un deuxième mode de réalisation représenté sur la Figure 5, l'élément de fixation 270 est solidaire du longeron inférieur 206 et prend la forme d'une palette qui s'étend dans la continuité longitudinale du longeron inférieur 206 et est orienté à l'extérieur du caisson et vers l'arrière.

Le système de fixation 250 comprend également une bielle arrière 272 qui relie, en utilisation, l'élément de fixation 270 à un élément structurel de l'aile 104 et qui est orientée en X/Z.

La bielle arrière 272 présente une première extrémité montée articulée à l'élément de fixation 270 et une deuxième extrémité montée articulée sur une ferrure 274 fixée à l'élément structurel de l'aile 104, en particulier ici au panneau d'intrados 216 de l'aile 104. La liaison de la bielle arrière 272 à l'élément structurel s'effectue ici par l'intermédiaire de la ferrure 274.

La direction longitudinale de la bielle arrière 272, c'est-à-dire la ligne reliant les centres des deux articulations de ladite bielle arrière 272 est globalement tangentielle au panneau d'intrados au niveau de la liaison à l'aile 104, c'est-à-dire au niveau de la ferrure 274. D'autre part, dans un but de se prémunir des cas de rupture et de propagation, (dit `failure mode' en anglais) la bielle arrière 272 peut être constituée des deux âmes distinctes, mais reliées entre elles par un système de boulonnage conventionnel (non détaillé ici) pour ne constituer qu'une pièce travaillant selon les différents cas et conditions de chargement. La bielle arrière 272 peut également comporter des évidements (non représentés sur les figures), afin d'alléger le système de fixation.

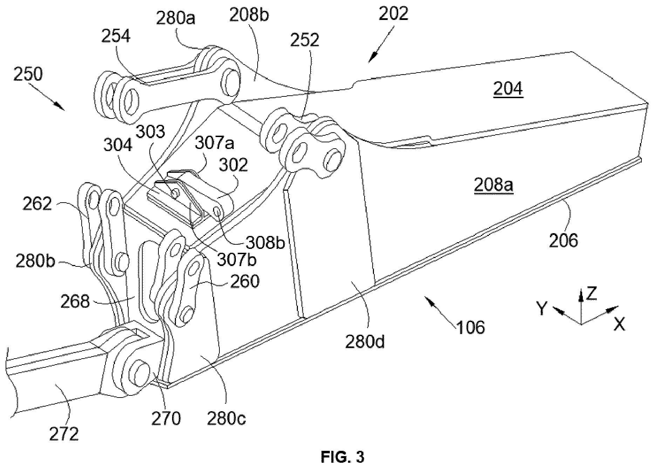

Le système de fixation 250 comprend également une manille transversale 302 (vue uniquement sur les Figures 3, 4 et 5) qui est orientée selon une direction transversale Y du mât réacteur 106 et qui relie, en utilisation, le longeron supérieur 204 du mât réacteur 106 à un élément structurel de l'aile 104 et plus particulièrement ici au panneau d'intrados 216.

La manille transversale 302 est orientée en Y, c'est-à-dire transversalement par rapport à l'axe longitudinal du mât réacteur 106 et elle est pratiquement parallèle au panneau d'intrados 216. Une extrémité de la manille transversale 302 est reliée au longeron supérieur 204 par l'intermédiaire d'une première chape 304 fixée au longeron supérieur 204 et l'autre extrémité de la manille transversale 302 est reliée au panneau d'intrados 216 par l'intermédiaire d'une deuxième chape 306 fixée au panneau d'intrados 216. Plus précisément, une extrémité de la manille transversale 302 est reliée au longeron supérieur 204 au moyen d'un axe 303 qui s'étend sensiblement selon l'axe X, et par l'intermédiaire de la première chape 304 ; et l'autre extrémité de la manille transversale 302 est reliée au panneau d'intrados 216 de l'aile 104 au moyen d'un axe 305 qui s'étend sensiblement selon l'axe X, et par l'intermédiaire de la deuxième chape 306. L'axe 303 traverse une première oreille 307a de la première chape 304, puis une première ouverture de la manille transversale 302 débouchant selon l'axe X, et enfin une deuxième oreille 307b de la première chape 304. L'axe 305 traverse une première oreille 309a de la deuxième chape 306, puis une deuxième ouverture 308b de la manille transversale 302 débouchant selon l'axe X, et enfin une deuxième oreille 309b de la deuxième chape 306. La ligne reliant les deux centres (ouvertures) de la manille transversale 302 est orientée transversalement par rapport à l'axe longitudinal du mât réacteur 106. Par exemple, la ligne reliant les deux centres de la manille transversale 302 est orientée sensiblement selon l'axe Y.

Par conséquent, avec un tel système de fixation 250, la réaction du moment de flexion autour de l'axe Z, dit `Mz' est assurée par la combinaison de chargement des deux manilles supérieures 252 et 254 et de la manille transversale 302, la réaction du moment de torsion autour de l'axe X, dit 'Mx' est assurée par la combinaison de chargement des deux manilles inférieures 260 et 262 et de la manille transversale 302 et enfin, la réaction du moment de flexion autour de l'axe Y, dit `My' est assurée par la combinaison des manilles supérieures 252 et 254, de la bielle arrière 272 et des manilles inférieures 260 et 262.

Un avantage du système de fixation 250 avec cet arrangement particulier, est que la structure primaire 202 du mât réacteur 106 comporte une charge unidirectionnelle à chacune des six introductions de charges, c'est-à-dire au niveau de chaque manille, pour réagir de façon indépendante selon les six degrés de liberté, ce qui donne un système de fixation déterminé statiquement. En outre, un tel arrangement est moins encombrant et facile à dimensionner. En outre, un tel arrangement induit un caisson de structure primaire de mât compact, notamment selon un axe longitudinal horizontal.

De cette façon, la structure primaire 202 du mât réacteur est soumise à une charge unidirectionnelle à chacune des six introductions de charges pour réagir indépendamment selon les six degrés de liberté, ce qui donne un système statiquement déterminé, dit 'isostatique'.

En outre, avant la mise en place des manilles sur la structure primaire 202, celle-ci est unique et peut être mise en place communément pour une aile tribord ou une aile bâbord. Autrement dit, le mât réacteur est commun pour une aile tribord ou une aile bâbord, malgré la flèche de l'aile.

Pour renforcer la sécurité (« fail safe » en anglais), en particulier en cas de rupture ou de fissure d'un panneau latéral 208a-b, au niveau de la jonction avec une manille 252, 254, 260, 262, chaque panneau latéral 208a-b est renforcé par un panneau de renfort 280a-d qui est fixé sur la hauteur contre le panneau latéral 208a-b, en particulier par soudure, rivets, etc, et qui comporte un orifice pour la fixation de la manille 252, 254, 260, 262. Ainsi, en cas de rupture d'un panneau latéral 208a-b au niveau d'une jonction, le panneau de renfort 280a-d prendra le relais.

## Revendications

1. Ensemble pour un aéronef (10) comportant une aile (104) et un mât réacteur (106) pour le montage d'un turboréacteur (102) sous ladite aile (104), le mât réacteur (106) comportant :
- une structure primaire (202) formant un caisson et comportant un panneau latéral tribord (208a), un panneau latéral bâbord (208b), un longeron supérieur (204), un longeron inférieur (206) et une nervure arrière (268) qui ferme le caisson à l'arrière,
- un premier et un deuxième jeux de manilles supérieures (252, 254), où le premier jeu de manilles supérieures (252) fixe, en utilisation, le panneau latéral tribord (208a) à un élément structurel de l'aile (104), et où le deuxième jeu de manilles supérieures (254) fixe, en utilisation, le panneau latéral bâbord (208b) à un élément structurel de l'aile (104),
- un premier et un deuxième jeux de manilles inférieures (260, 262), où le premier jeu de manilles inférieures (260) fixe, en utilisation, le panneau latéral tribord (208a) à un élément structurel de l'aile (104), et où le deuxième jeu de manilles inférieures (262) fixe, en utilisation, le panneau latéral bâbord (208b) à un élément structurel de l'aile (104),
- un élément de fixation (270) solidaire de l'un parmi la nervure arrière (268) ou le longeron inférieur (206),
- une bielle arrière (272) qui relie l'élément de fixation (270) à un élément structurel de l'aile (104), et
- une manille transversale (302) qui relie le longeron supérieur (204) à un élément structurel de l'aile (104) et où la ligne reliant les deux centres de la manille transversale (302) est orientée transversalement par rapport à un axe longitudinal du mât réacteur (106),
- un panneau de renfort (280a-d), au niveau de chaque jonction entre un panneau latéral tribord ou bâbord (208a-b) avec une manille du premier ou deuxième jeux de manilles supérieures ou inférieures (252, 254, 260, 262), qui est fixé sur la hauteur contre le panneau latéral tribord ou bâbord (208a-b) et auquel ladite manille du premier ou deuxième jeux de manilles supérieures ou inférieures (252, 254, 260, 262) est également fixée.

2. Ensemble pour un aéronef (10) selon la revendication 1, dans lequel les manilles du premier et du deuxième jeux de manilles supérieures (252, 254) sont orientées avec une inclinaison comprise entre 0° et 45° par rapport à un axe purement horizontal, et de préférence, elles sont orientées quasi horizontalement.

3. Ensemble pour un aéronef (10) selon l'une des revendications 1 ou 2, dans lequel les manilles du premier et du deuxième jeux de manilles supérieures (252, 254) sont chacune alignées dans la continuité avec le panneau latéral (208a-b) auquel elles sont fixées.

4. Ensemble pour un aéronef (10) selon l'une des revendications 1 à 3, dans lequel les manilles du premier et du deuxième jeux de manilles inférieures (260, 262) sont orientées selon une inclinaison comprise entre 0° et 30° par rapport à un axe purement vertical, et de préférence, elles sont orientées quasi verticalement,

5. Ensemble pour un aéronef (10) selon l'une des revendications 1 à 4, dans lequel les manilles du premier et du deuxième jeux de manilles inférieures (260, 262) sont chacune alignées dans la continuité avec le panneau latéral (208a-b) auquel elles sont fixées.

6. Aéronef (10) comportant un turboréacteur (102) et un ensemble selon l'une des revendications précédentes, où le turboréacteur (102) est fixé sous le mât réacteur (106).

## Patentansprüche

1. Anordnung für ein Luftfahrzeug (10), welche einen Tragflügel (104) und einen Triebwerksträger (106) zur Anbringung eines Turbostrahltriebwerks (102) unter dem Tragflügel (104) aufweist, wobei der Triebwerksträger (106) aufweist:
- eine Primärstruktur (202), die einen Kasten bildet und eine steuerbordseitige Seitenplatte (208a), eine backbordseitige Seitenplatte (208b), einen oberen Längsträger (204), einen unteren Längsträger (206) und eine hintere Rippe (268), welche den Kasten hinten verschließt, aufweist,
- einen ersten und einen zweiten Satz von oberen Schäkeln (252, 254), wobei der erste Satz von oberen Schäkeln (252) im Gebrauch die steuerbordseitige Seitenplatte (208a) an einem Strukturelement des Tragflügels (104) befestigt und wobei der zweite Satz von oberen Schäkeln (254) im Gebrauch die backbordseitige Seitenplatte (208b) an einem Strukturelement des Tragflügels (104) befestigt,
- einen ersten und einen zweiten Satz von unteren Schäkeln (260, 262), wobei der erste Satz von unteren Schäkeln (260) im Gebrauch die steuerbordseitige Seitenplatte (208a) an einem Strukturelement des Tragflügels (104) befestigt und wobei der zweite Satz von unteren Schäkeln (262) im Gebrauch die backbordseitige Seitenplatte (208b) an einem Strukturelement des Tragflügels (104) befestigt,
- ein Befestigungselement (270), das mit einem von der hinteren Rippe (268) und dem unteren Längsträger (206) fest verbunden ist,
- eine hintere Pleuelstange (272), welche das Befestigungselement (270) mit einem Strukturelement des Tragflügels (104) verbindet, und
- einen quer angeordneten Schäkel (302), welcher den oberen Längsträger (204) mit einem Strukturelement des Tragflügels (104) verbindet und wobei die Linie, welche die zwei Mittelpunkte des quer angeordneten Schäkels (302) verbindet, quer bezüglich einer Längsachse des Triebwerksträgers (106) ausgerichtet ist,
- eine Verstärkungsplatte (280a-d) an jeder Verbindungsstelle zwischen einer steuerbordseitigen oder backbordseitigen Seitenplatte (208a-b) mit einem Schäkel des ersten oder zweiten Satzes von oberen oder unteren Schäkeln (252, 254, 260, 262), welche über die Höhe an der steuerbordseitigen oder backbordseitigen Seitenplatte (208a-b) befestigt ist und an welcher der Schäkel des ersten oder zweiten Satzes von oberen oder unteren Schäkeln (252, 254, 260, 262) ebenfalls befestigt ist.

2. Anordnung für ein Luftfahrzeug (10) nach Anspruch 1, wobei die Schäkel des ersten und des zweiten Satzes von oberen Schäkeln (252, 254) mit einer Neigung zwischen 0° und 45° bezüglich einer genau horizontalen Achse ausgerichtet sind und vorzugsweise nahezu horizontal ausgerichtet sind.

3. Anordnung für ein Luftfahrzeug (10) nach einem der Ansprüche 1 oder 2, wobei die Schäkel des ersten und des zweiten Satzes von oberen Schäkeln (252, 254) jeweils in Verlängerung der Seitenplatte (208a-b) ausgerichtet sind, an welcher sie befestigt sind.

4. Anordnung für ein Luftfahrzeug (10) nach einem der Ansprüche 1 bis 3, wobei die Schäkel des ersten und des zweiten Satzes von unteren Schäkeln (260, 262) mit einer Neigung zwischen 0° und 30° bezüglich einer genau vertikalen Achse ausgerichtet sind und vorzugsweise nahezu vertikal ausgerichtet sind.

5. Anordnung für ein Luftfahrzeug (10) nach einem der Ansprüche 1 bis 4, wobei die Schäkel des ersten und des zweiten Satzes von unteren Schäkeln (260, 262) jeweils in Verlängerung der Seitenplatte (208a-b) ausgerichtet sind, an welcher sie befestigt sind.

6. Luftfahrzeug (10), welches ein Turbostrahltriebwerk (102) und eine Anordnung nach einem der vorhergehenden Ansprüche aufweist, wobei das Turbostrahltriebwerk (102) unter dem Triebwerksträger (106) befestigt ist.

## Claims

1. Assembly for an aircraft (10) having a wing (104) and an engine pylon (106) for mounting a jet engine (102) beneath said wing (104), the engine pylon (106) having:
- a primary structure (202) forming a box and having a starboard-side lateral panel (208a), a port-side lateral panel (208b), an upper spar (204), a lower spar (206) and a rear rib (268) that closes the box at the rear,
- a first and a second set of upper shackles (252, 254), wherein the first set of upper shackles (252) fastens, in use, the starboard-side lateral panel (208a) to a structural element of the wing (104), and wherein the second set of upper shackles (254) fastens, in use, the port-side lateral panel (208b) to a structural element of the wing (104),
- a first and a second set of lower shackles (260, 262), wherein the first set of lower shackles (260) fastens, in use, the starboard-side lateral panel (208a) to a structural element of the wing (104), and wherein the second set of lower shackles (262) fastens, in use, the port-side lateral panel (208b) to a structural element of the wing (104),
- a fastening element (270) secured to either the rear rib (268) or the lower spar (206),
- a rear rod (272) that connects the fastening element (270) to a structural element of the wing (104), and
- a transverse shackle (302) that connects the upper spar (204) to a structural element of the wing (104), wherein the line connecting the two centres of the transverse shackle (302) is oriented transversely with respect to a longitudinal axis of the engine pylon (106),
- a reinforcing panel (280a-d), at each join between a starboard-side or port-side lateral panel (208a-b) and a shackle of the first or second set of upper or lower shackles (252, 254, 260, 262), which is fastened along the height against the starboard-side or port-side lateral panel (208a-b) and to which said shackle of the first or second set of upper or lower shackles (252, 254, 260, 262) is also fastened.

2. Assembly for an aircraft (10) according to Claim 1, wherein the shackles of the first and the second sets of upper shackles (252, 254) are oriented with an inclination of between 0° and 45° with respect to a purely horizontal axis, and they are preferably oriented more or less horizontally.

3. Assembly for an aircraft (10) according to either of Claims 1 and 2, wherein the shackles of the first and the second sets of upper shackles (252, 254) are each aligned in the continuation of the lateral panel (208a-b) to which they are fastened.

4. Assembly for an aircraft (10) according to one of Claims 1 to 3, wherein the shackles of the first and the second sets of lower shackles (260, 262) are oriented with an inclination of between 0° and 30° with respect to a purely vertical axis, and they are preferably oriented more or less vertically.

5. Assembly for an aircraft (10) according to one of Claims 1 to 4, wherein the shackles of the first and the second sets of lower shackles (260, 262) are each aligned in the continuation of the lateral panel (208a-b) to which they are fastened.

6. Aircraft (10) having a jet engine (102) and an assembly according to one of the preceding claims, wherein the jet engine (102) is fastened beneath the engine pylon (106).
